# EUROPEAN PATENT APPLICATION

(11) **EP 4 607 687 A1**
(43) Date of publication of application: **27.08.2025**
(21) Application number: 24773806.5
(22) Date of filing: 30.01.2024
(51) Int. Cl.: H01M 50/553, H01M 50/562

(54) **BATTERY CELL, BATTERY, AND ELECTRIC DEVICE**

(30) Priority: 23.03.2023 CN 202310293432
(71) Applicant: Contemporary Amperex Technology (Hong Kong) Limited, Hong Kong (HK)
(72) Inventor: LIN, Denghua, Ningde, Fujian 352100 (CN); CHEN, Long, Ningde, Fujian 352100 (CN); CHEN, Xinxiang, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/074740
(87) International publication number: WO 2024/193237

(57) **Abstract**

The present application discloses a battery cell, a battery, and an electrical apparatus, wherein the battery cell includes an electrode assembly, a shell, and an electrode terminal; the electrode assembly is at least partially accommodated in the shell; the electrode terminal is electrically connected to the electrode assembly; the electrode terminal is arranged on a wall portion of the shell, the electrode terminal includes a first metal layer and a second metal layer that are made of different materials; in the thickness direction of the wall portion, the first metal layer is located on one side of the second metal layer facing the electrode assembly; the first metal layer and the second metal layer are connected to form a connecting interface, and at least a part of the connecting interface is a curved surface. According to the battery cell provided in the embodiments of the present application, at least a part of the connecting interface between the first metal layer and the second metal layer that are made of different materials is set to be the curved surface, which effectively enhances the strength of connection between the first metal layer and the second metal layer, lowers a risk of breakage of the electrode terminal, and is beneficial to improving performance of the battery cell.

## Description

### CROSS-REFERENCE

The present application is based on Chinese patent application No. 202310293432.5 filed on March 23, 2023 and entitled "BATTERY CELL, BATTERY, AND ELECTRICAL APPARATUS", which is incorporated into the present application by reference in its entirety.

### TECHNICAL FIELD

The present application relates to the technical field of batteries, and in particular, to a battery cell, a battery, and an electrical apparatus.

### BACKGROUND

At present, to ensure strength of connection between an electrode terminal of a battery cell and another component, the electrode terminal is usually formed by compounding different metal materials. However, due to poor strength of connection between two metal materials, two parts of the electrode terminal that are made of different materials are prone to breakage, which is not conducive to improving the performance of the battery cell.

### SUMMARY OF THE INVENTION

One of objectives of embodiments of the present application is to provide a battery cell, a battery, and an electrical apparatus, aiming to solve the technical problem that an electrode terminal formed by compounding different metal materials is prone to breakage.

In order to solve the above technical problems, the embodiments of the present application use technical solutions as follows:
In a first aspect, a battery cell is provided, including an electrode assembly, a shell, and an electrode terminal. The electrode assembly is at least partially accommodated in the shell. The electrode terminal is electrically connected to the electrode assembly. The electrode terminal is arranged on a wall portion of the shell. The electrode terminal includes a first metal layer and a second metal layer that are made of different materials. In the thickness direction of the wall portion, the first metal layer is located on one side of the second metal layer facing the electrode assembly; the first metal layer and the second metal layer are connected to form a connecting interface. At least a part of the connecting interface is a curved surface.

The battery cell provided in the embodiments of the present application has the beneficial effects: at least a part of the connecting interface between the first metal layer and the second metal layer that are made of different materials is set to be the curved surface, so that a connecting area between the first metal layer and the second metal layer is effectively enlarged, which enhances strength of connection between the first metal layer and the second metal layer, lowers a risk of breakage of the electrode terminal, and is beneficial to improving performance of the battery cell.

In some embodiments of the present application, the electrode terminal has a first central axis parallel to the thickness direction; the connecting interface includes a first connecting surface and a second connecting surface located at the periphery of the first connecting surface; the first central axis passes through the first connecting surface; and the first connecting surface is a curved surface.

By using the above technical solution, a middle part of the connecting interface is a curved surface, which ensures that a sufficient connecting area between a middle part of the first metal layer and a middle part of the second metal layer, thereby effectively enhancing the strength of connection between the first metal layer and the second metal layer and lowering the risk of breakage of the electrode terminal.

In some embodiments of the present application, the first connecting surface has a second central axis parallel to the thickness direction; and the second central axis overlaps the first central axis.

By using the above technical solution, a force on a joint between the first metal layer and the second metal layer in a circumferential direction of the electrode terminal is more uniform, and meanwhile, the connecting area between the middle part of the first metal layer and the middle part of the second metal layer can be further enlarged, thereby further enhancing the strength of connection between the first metal layer and the second metal layer and further lowering the risk of breakage of the electrode terminal.

In some embodiments of the present application, the first metal layer is a copper layer; the second metal layer is an aluminum layer; and in the thickness direction, the first connecting surface is recessed relative to the second connecting surface in a direction close to the electrode assembly.

By using the above technical solution, consumption of a material of the first metal layer can be effectively reduced, thereby effectively reducing the manufacturing costs of the electrode terminal.

In some embodiments of the present application, the battery cell further includes an adapter. The adapter is configured to connect the electrode assembly with the first metal layer, to electrically connect the electrode assembly with the electrode terminal; the first metal layer includes a first connecting portion for connecting the adapter; and at least a part of the first connecting portion is arranged opposite to the first connecting surface.

By using the above technical solution, at least a part of the first connecting portion is arranged opposite to the first connecting surface. Since the first connecting surface is the curved surface with a large area, the strength of connection of a portion, corresponding to the first connecting surface, of the joint between the first metal layer and the second metal layer is high, which can effectively counteract a pulling force of the adapter on the first metal layer, thereby further lowering the risk of breakage of the electrode terminal.

In some embodiments of the present application, the first connecting portion and the adapter are welded and fixed, and a first welding mark is formed.

By using the above technical solution, it is convenient to connect the electrode terminal with the adapter.

In some embodiments of the present application, the first welding mark does not exceed the first connecting surface in a direction from the electrode assembly to the electrode terminal.

By using the above technical solution, the connecting interface can be prevented from being damaged, so as to ensure the strength of connection between the first metal layer and the second metal layer, thereby further lowering the risk of breakage of the electrode terminal.

In some embodiments of the present application, in the thickness direction, the thickness of the part of the first connecting portion located at the first welding mark is H1, and the thickness of the part of the first welding mark located at the first connecting portion is H2, 0.6≤H2/H1≤0.9.

By using the above technical solution, the strength of connection between the first connecting portion and the adapter can be ensured, and the risk of damage to the connecting interface due to the first connecting portion being welded through, which effectively ensures the strength of connection between the first metal layer and the second metal layer, thereby further lowering the risk of breakage of the electrode terminal.

In some embodiments of the present application, a positioning structure is arranged between the first metal layer and the adapter; and the first welding mark is arranged at the periphery of the positioning structure.

By using the above technical solution, a relative position between the adapter and the electrode terminal is effectively limited, thereby improving a situation of mutual displacement during connection of the adapter and the electrode terminal, and effectively ensuring an effect of the connection between the adapter and the electrode terminal. Meanwhile, it can improve a situation of interference occurring between the first welding mark and the positioning structure, thus effectively enlarging a coverage area of the first welding mark and effectively enhancing the strength of connection between the electrode terminal and the adapter.

In some embodiments of the present application, the positioning structure includes a protrusion and a recess which are matched with each other; one of the first metal layer and the adapter is provided with the protrusion; and the other one of the first metal layer and the adapter is provided with the recess.

By using the above technical solution, it is convenient to limit the relative position between the adapter and the electrode terminal.

In some embodiments of the present application, the first metal layer is provided with the protrusion; the adapter is provided with the recess; and the recess is a through hole penetrating through the adapter.

By using the above technical solution, it is convenient to limit the relative position between the adapter and the electrode terminal.

In some embodiments of the present application, the adapter is provided with a groove; the recess penetrates through the bottom of the groove; and the first welding mark is arranged at the bottom of the groove and is spaced apart from the recess.

By using the above technical solution, it is convenient to limit a relative position between the adapter and the electrode terminal. Meanwhile, it can improve a situation of interference occurring between the first welding mark and the positioning structure, thus effectively enlarging a coverage area of the first welding mark and effectively enhancing the strength of connection between the electrode terminal and the adapter.

In some embodiments of the present application, the adapter is provided with a groove; the recess penetrates through the bottom of the groove; and the protrusion passes through the recess and is fixedly connected to one side, facing the electrode assembly, of the bottom of the groove.

By using the above technical solution, it is convenient to limit the relative position between the adapter and the electrode terminal, and meanwhile, the strength of connection between the electrode terminal and the adapter is effectively enhanced.

In some embodiments of the present application, the second metal layer includes a second connecting portion configured to be connected to an external busbar; and at least a part of the second connecting portion is arranged opposite to the first connecting surface.

By using the above technical solution, at least a part of the second connecting portion is arranged opposite to the first connecting surface. Since the first connecting surface is the curved surface with a large area, the strength of connection of a portion, corresponding to the first connecting surface, of the joint between the first metal layer and the second metal layer is high, which can effectively offset a pulling force of the external busbar on the second metal layer, thereby further lowering the risk of breakage of the electrode terminal.

In some embodiments of the present application, the second connecting portion and the external busbar are welded and fixed, and a second welding mark is formed.

By using the above technical solution, it is convenient to connect the electrode terminal with the external busbar.

In some embodiments of the present application, the second welding mark does not exceed the first connecting surface in a direction from the electrode terminal to the electrode assembly.

By using the above technical solution, the connecting interface can be prevented from being damaged, so as to ensure the strength of connection between the first metal layer and the second metal layer, thereby further lowering the risk of breakage of the electrode terminal.

In some embodiments of the present application, in the thickness direction, the thickness of the part of the second connecting portion located at the second welding mark is H3, and the thickness of the part of the second welding mark located at the second connecting portion is H4, 0.6≤H4/H3≤0.9.

By using the above technical solution, the strength of connection between the second connecting portion and the external busbar can be ensured, and the risk of damage to the connecting interface due to the second connecting portion being welded through, which effectively ensures the strength of connection between the first metal layer and the second metal layer, thereby further lowering the risk of breakage of the electrode terminal.

In some embodiments of the present application, the second connecting surface is a curved surface.

By using the above technical solution, an area of the connecting interface can be further enlarged, thus further enhancing the strength of connection between the first metal layer and the second metal layer and further lowering the risk of breakage of the electrode terminal.

In some embodiments of the present application, the electrode terminal has a first central axis parallel to the thickness direction; the connecting interface has a second central axis parallel to the thickness direction; the second central axis overlaps the first central axis; the projection of the connecting interface in the thickness direction has a first length in a first direction; the projection of the electrode terminal in the thickness direction has a second length in the first direction; the first length is equal to the second length; and the first direction passes through the first central axis of the electrode terminal and is perpendicular to the thickness direction.

By using the above technical solution, an area of the connecting interface can be further enlarged, thus further enhancing the strength of connection between the first metal layer and the second metal layer and further lowering the risk of breakage of the electrode terminal.

In some embodiments of the present application, the projection of the peripheral edge of the connecting interface in the thickness direction overlaps the projection of the peripheral edge of the electrode terminal in the thickness direction.

By using the above technical solution, an area of the connecting interface can be maximized, thus further enhancing the strength of connection between the first metal layer and the second metal layer and further lowering the risk of breakage of the electrode terminal.

In some embodiments of the present application, the projection of the wall portion in the thickness direction is a rectangle, and the first direction is the length direction or width direction of the wall portion; or the projection of the wall portion in the thickness direction is a circular ring, and the first direction is the radial direction of the wall portion.

By using the above technical solution, the first direction can be set according to a specific shape of the wall portion.

In some embodiments of the present application, a distance between the point of the connecting interface closest to the electrode assembly and the first central axis is less than or equal to 6 mm.

By using the above technical solution, the part having a relatively large area of the connecting interface is made as close as possible to the first central axis of the electrode terminal, so as to increase a connecting force of the part, close to the first central axis of the electrode terminal, of the joint between the first metal layer and the second metal layer, thereby further enhancing the strength of connection between the first metal layer and the second metal layer and further lowering the risk of breakage of the electrode terminal.

In some embodiments of the present application, the point of the connecting interface closest to the electrode assembly is located on the first central axis.

By using the above technical solution, the part having a relatively large area of the connecting interface is concentrated at the first central axis of the electrode terminal, so as to increase a connecting force of a portion, located on the first central axis of the electrode terminal, of the joint between the first metal layer and the second metal layer, thereby further enhancing the strength of connection between the first metal layer and the second metal layer and further lowering the risk of breakage of the electrode terminal.

In some embodiments of the present application, in the thickness direction, a distance between the point of the connecting interface farthest from the electrode assembly and the point of the connecting interface closest to the electrode assembly is H5, 1 mm ≤ H5 ≤ 10 mm.

By using the above technical solution, a height of the connecting interface in the thickness direction of a wall body is not too small, so that the area of the connecting interface is effectively ensured, thereby ensuring the strength of connection between the first metal layer and the second metal layer and lowering the risk of breakage of the electrode terminal. Meanwhile, the height of the connecting interface in the thickness direction of the wall body is not too large, thereby ensuring that the first metal layer and the second metal layer have sufficient thicknesses to lower a risk that the first metal layer penetrates through the second metal layer or the second metal layer penetrates through the first metal layer, which is beneficial to improving the performance of the battery cell.

In some embodiments of the present application, the battery cell further includes an insulating member and a fixing member; the wall portion is provided with an electrode lead-out hole; the fixing member is connected to the wall portion and is arranged around the electrode lead-out hole; at least a part of the electrode terminal is accommodated in an accommodating space defined by the fixing member; the insulating member is arranged between the fixing member and the electrode terminal; and the fixing member presses the electrode terminal through the insulating member, so that the electrode terminal is fixed to the wall portion.

By using the above technical solution, the insulating member can insulate and separate the fixing member from the electrode terminal, to lower a risk of short circuit between the fixing member and the electrode terminal, which is beneficial to improving the performance of the battery cell.

In some embodiments of the present application, the battery cell further includes a sealing member. The sealing member is at least partially located between the wall portion and the electrode terminal.

By using the above technical solution, a risk of leakage of an electrolyte solution inside the shell from a space between the electrode terminal and the wall portion is lowered, which is beneficial to improving the performance of the battery cell.

In some embodiments of the present application, the shell includes a case and an end cover; one end of the case has an opening; the end cover covers the opening; the case includes a side wall and a bottom wall; the side wall is annularly arranged on the outer side of the electrode assembly; the bottom wall is arranged opposite to the opening; and the wall portion is the end cover or the bottom wall or the side wall.

By using the above technical solution, the electrode terminal can be mounted on the end cover or the bottom wall or the side wall.

In a second aspect, the embodiments of the present application further provide a battery, including the battery cell of any one of the above embodiments.

The battery provided in this embodiment of the present application has the beneficial effects that performance of the battery provided in this embodiment of the present application is effectively improved because the battery provided in this embodiment of the present application uses the battery cell of any one of the above embodiments.

In a third aspect, the embodiments of the present application provide an electrical apparatus, including the above battery.

The electrical apparatus provided in this embodiment of the present application has the beneficial effects that performance of the electrical apparatus provided in this embodiment of the present application is effectively improved because the electrical apparatus uses the above battery.

### BRIEF DESCRIPTION OF DRAWINGS

To describe the technical solutions in the embodiments of the present application more clearly, the following briefly introduces the accompanying drawings for describing the embodiments or the related art. Apparently, the accompanying drawings in the following description show merely some embodiments of the present application, and a person of ordinary skill in the art may still derive other drawings from the accompanying drawings without creative efforts.
FIG. 1 is a schematic diagram of a structure of a vehicle according to an embodiment of the present application;
FIG. 2 is a schematic exploded view of a battery according to an embodiment of the present application;
FIG. 3 is a schematic structural diagram of a battery cell according to an embodiment of the present application;
FIG. 4 is schematic exploded view of the battery cell shown in FIG. 3;
FIG. 5 is a schematic diagram of a front view structure of an electrode terminal in the battery cell shown in FIG. 4;
FIG. 6 is a schematic diagram of a cross-sectional structure of the electrode terminal shown in FIG. 5 along direction A-A;
FIG. 7 is a schematic diagram of a connecting structure for the battery cell shown in FIG. 3 and an external busbar;
FIG. 8 is a schematic diagram of a cross-sectional structure along direction B-B in FIG. 7;
FIG. 9 is a schematic diagram I of an enlarged structure of part C in FIG. 8;
FIG. 10 is a schematic diagram II of an enlarged structure of part C in FIG. 8;
FIG. 11 is a schematic diagram III of an enlarged structure of part C in FIG. 8; and
FIG. 12 is a schematic diagram of a projection structure of an electrode terminal and a connecting interface of the electrode terminal in the thickness direction of a wall portion according to an embodiment of the present application.

### Descriptions of reference numerals:

1000: vehicle;
100: battery;
10: box body; 11: first part; 12: second part; 13: accommodating space;
20: battery cell; 21: shell; 211: case; 212: end cover; 2121: electrode lead-out hole; 22: electrode terminal; 221: first metal layer; 2211: first connecting portion; 2212: protrusion; 22121: fourth connecting portion; 222: second metal layer; 2221: second connecting portion; 223: connecting interface; 2231: first connecting surface; 2232: second connecting surface; 224: first central axis; 225: first welding mark; 226: second welding mark; 23: electrode assembly; 231: tab; 24: adapter; 241: recess; 242: groove; 25: insulating member; 26: fixing member; 261: pressing portion; 262: third connecting portion; 27: sealing member; 28: insulating baffle; 29: pressure relief mechanism;
30: external busbar;
200: controller; and
300: motor.

### DESCRIPTION OF EMBODIMENTS

In order to make the technical problems, technical solutions, and beneficial effects to be solved by the present application clearer, the following is a further detailed explanation of the present application in conjunction with the accompanying drawings and embodiments. It should be understood that the specific embodiments described herein are merely used to explain the present application but are not intended to limit the present application.

It should be noted that when an element is referred to as being "fixed to" or "arranged to" another element, the element can be directly or indirectly on another element. When an element is referred to as being "connected" to another element, the component can be directly or indirectly connected to the another element.

It should be understood that orientations or positional relationships indicated by the terms "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting the present application.

In addition, the terms "first" and "second" are used for descriptive purposes only, and cannot be construed as indicating or implying relative importance or implicitly indicating the number of technical features indicated. From this, features defined as "first" and second" may explicitly or implicitly include one or more features. In the description of the present application, "plurality" means two or more, unless otherwise expressly and specifically defined.

As the smallest unit of a battery, a battery cell usually includes a shell, an electrode assembly and an electrode terminal. The electrode assembly is arranged in the shell, and the electrode terminal is arranged on a wall portion of the shell. A part of the electrode terminal extends into an internal environment of the battery cell and is connected to the electrode assembly through an adapter, and another part of the electrode terminal is exposed to an external environment of the battery cell and is connected to a busbar, to input or output electrical energy of the battery cell. However, in actual use, the electrode terminal is prone to breakage, thereby affecting performance of the battery cell.

One of the reasons why the electrode terminal is easily broken is that a metal material for the busbar is different from a metal material for the adapter. For example, the metal material for the busbar is aluminum, and the metal material for the adapter is copper. Strength of connection between different metal materials is poor. In this case, in order to enhance strength of connection between the electrode terminal and the busbar and strength of connection between the electrode terminal and the adapter, the electrode terminal is usually formed by compounding different metal materials. In the electrode terminal, a connecting interface between two portions made of different materials is usually a plane. In this case, the connecting interface has a relatively small area. As a result, the strength of connection between the two portions of the electrode terminal that are made of different materials is poor. After the electrode terminal is connected between the busbar and the adapter, the electrode terminal can be subjected to a tensile stress from both the busbar and the adapter at the same time. Over time, the electrode terminal is prone to breakage at the above connecting interface.

In order to lower a risk of breakage of the electrode terminal, an embodiment of the present application provides an electrode terminal. At least a part of the connecting interface between a first metal layer and a second metal layer that are made of different materials is set to be a curved surface, so that a connecting area between the first metal layer and the second metal layer is effectively enlarged, which enhances strength of connection between the first metal layer and the second metal layer, and lowers a risk of breakage of the electrode terminal.

According to the battery cell, a battery, and an electrical apparatus using the battery as a power source, which are disclosed in the embodiments of the present application, the electrical apparatus may be, but is not limited to, a vehicle, a mobile phone, a portable device, a laptop computer, a ship, a spacecraft, an electric toy, an electric tool, and the like. The vehicle may be a fuel vehicle, a gas vehicle, or a new energy vehicle, and the new energy vehicle may be a battery electric vehicle, a hybrid electric vehicle, an extended range vehicle, and the like. The spacecraft includes an airplane, a rocket, a space shuttle, a spaceship, and the like. The electric toy may include fixed or mobile electric toys, such as a game machine, an electric vehicle toy, an electric ship toy, an electric airplane toy, and the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer.

For convenience of description, the following embodiments are illustrated by taking an example in which the electrical apparatus according to an embodiment of the present application is a vehicle.

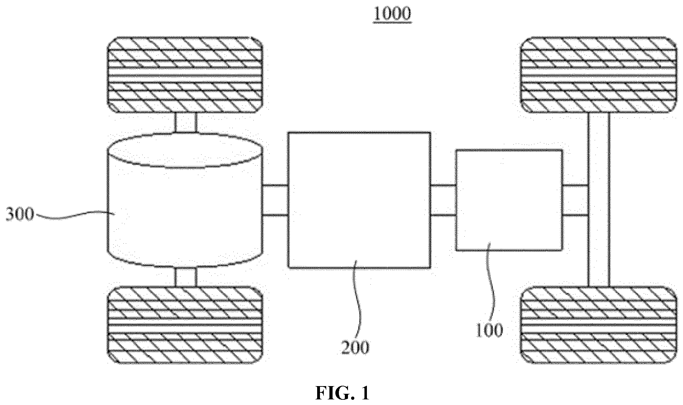

Referring to FIG. 1, FIG. 1 is a schematic diagram of a structure of a vehicle 1000 according to an embodiment of the present application. The vehicle 1000 may be a fuel vehicle, a gas vehicle, or a new energy vehicle, and the new energy vehicle may be a battery electric vehicle, a hybrid electric vehicle, an extended range vehicle, or the like. A battery 100 is arranged in the vehicle 1000. The battery 100 may be arranged at the bottom or head portion or tail portion of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to meet a demand for working power during starting, navigation, and driving of the vehicle 1000.

In some embodiments of the present application, the battery 100 not only may serve as the operating power source of the vehicle 1000, but also may serve as a driving power source of the vehicle 1000, thus replacing or partially replacing fuel or natural gas to provide driving power for the vehicle 1000.

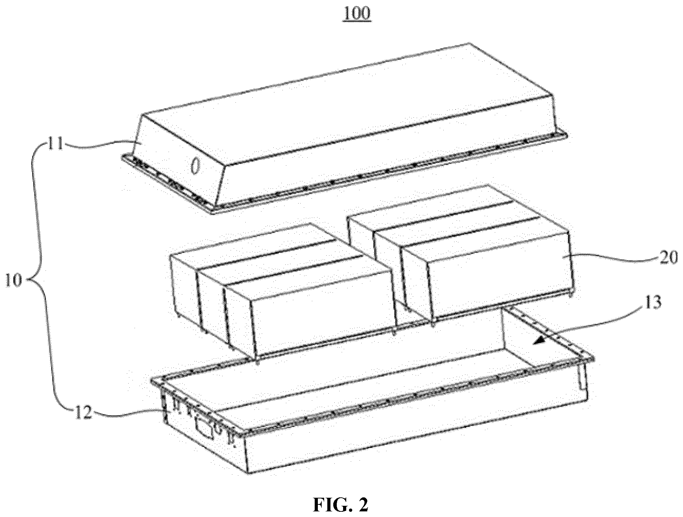

Referring to FIG. 2, FIG. 2 is a schematic exploded view of a battery 100 according to an embodiment of the present application. The battery 100 includes a box body 10 and a battery cell 20. The battery cell 20 is accommodated in the box body 10. The box body 10 is configured to provide an accommodating space 13 for the battery cell 20, and the box body 10 may be of various structures. In some embodiments, the box body 10 may include a first part 11 and a second part 12. The first part 11 and the second part 12 are covered by each other. The first part 11 and the second part 12 jointly define the accommodating space 13 for accommodating the battery cell 20. The second part 12 may be of a hollow structure with an opening in one end. The first part 11 may be of a plate-like structure. The first part 11 covers the opening side of the second part 12, so that the first part 11 and the second part 12 jointly define the accommodating space 13. Or, each of the first part 11 and the second part 12 may be of a hollow structure with an opening in one end, and the opening side of the first part 11 covers the opening side of the second part 12. Certainly, the box body 10 formed by the first part 11 and the second part 12 may be in various shapes, such as a cylinder or a cuboid.

In some embodiments, the box body 10 may be a part of a chassis structure of the vehicle 1000. For example, a part of the box body 10 may become at least a part of a floor of the vehicle 1000, or a part of the box body 10 may be at least a part of a cross beam and a longitudinal beam of the vehicle 1000.

In the battery 100, there may be a plurality of battery cells 20. The plurality of battery cells 20 may be connected in series or in parallel or be in parallel-series connection. The parallel-series connection means that the plurality of battery cells 20 are connected in both series and parallel. The plurality of battery cells 20 may be directly connected in series or in parallel or may be in parallel-series connection, and then an entirety composed of all the plurality of battery cells 20 is accommodated in the box body 10. Certainly, the battery 100 may also be a battery module composed of a plurality of battery cells 20 connected in series or parallel or in parallel-series connection, and then a plurality of battery modules are connected in series or in parallel or in parallel-series connection to form a whole which is accommodated in the box body 10. The battery 100 may further include other functional components. For example, the battery 100 may further include a busbar for electrically connecting the plurality of battery cells 20.

Each battery cell 20 may be a secondary battery or a primary battery. The secondary battery means a battery cell 20 that can continue to be used by activating an active material by charging after the battery cell 20 is discharged. The primary battery is a battery cell 20 that can continue to be used by activating the active material by charging after electric energy of the battery cell 20 is used up. The battery cell 20 may also be a lithium-ion battery, a sodium-ion battery, a sodium-lithium-ion battery, a lithium-metal battery, a sodium-metal battery, a lithium-sulfur battery, a magnesium-ion battery, a nickel-metal hydride battery, a nickelcadmium battery, a lead storage battery, and the like, but is not limited to this. The battery cell 20 may be a cylindrical battery cell, a prismatic battery cell, a pouch cell, or a battery cell 20 in another shape. The prismatic battery cell includes a square-shell battery cell, a blade-shaped battery cell, and a multi-prism battery. For example, the multi-prism battery may be a hexagonal prism battery. The present application has no special limitation.

Certainly, in some embodiments, the battery 100 may not include the box body 10, but a plurality of battery cells 20 may be electrically connected and formed into a whole through necessary fixing structures and are then assembled into an electrical apparatus.

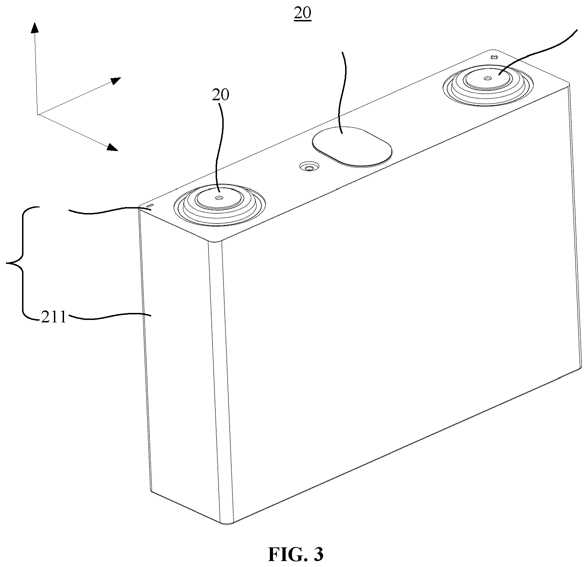

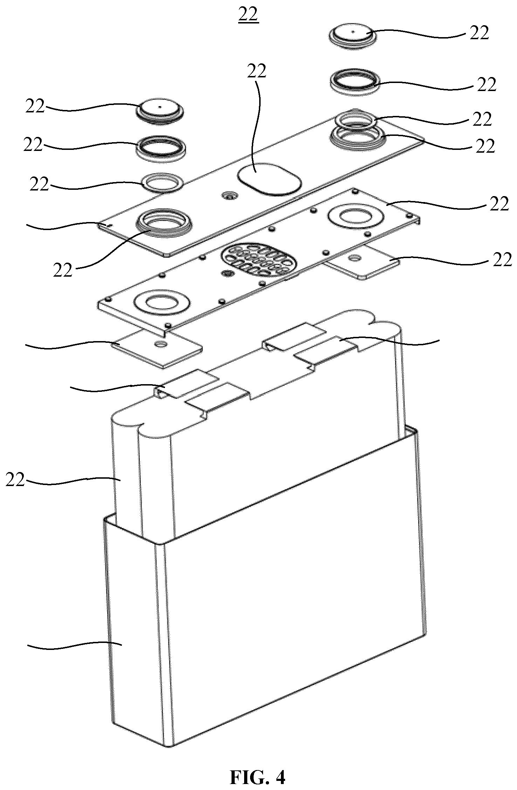

Referring to FIG. 3 and FIG. 4 together, FIG. 3 is a schematic structural diagram of a battery cell 20 according to an embodiment of the present application, and FIG. 4 is schematic exploded view of the battery cell 20 shown in FIG.. The battery cell 20 is a smallest unit constituting the battery 100. The battery cell 20 includes a shell 21, an electrode assembly 23, an electrode terminal 22, and other functional components.

The shell 21 includes a case 211 and an end cover 212. The case 211 is a component for providing an internal environment for the battery cell 20. The internal environment may be configured to accommodate the electrode assembly 23, an electrolyte solution, and other functional components. The case 211 may be an independent component. An opening may be formed in the case 211. The end cover 212 covers the opening to form the internal environment of the battery cell 20, and the electrode assembly 23, the electrolyte solution, and other components are accommodated in the internal environment. Specifically, the case 211 and the end cover 212 may form a common connecting surface before other components are placed into the shell. When the case 211 needs to be packaged, the end cover 212 covers the opening of the case 211. Optionally, the case 211 may be in various shapes and dimensions, such as a cuboid, a cylinder, and a hexagonal prism. Specifically, the shape of the case 211 may be determined according to a specific shape and size of the electrode assembly 23. The case 211 may be made of various materials, such as copper, iron, aluminum, stainless steel, and aluminum alloy, which is not particularly limited here.

The end cover 212 is a component that covers the opening of the case 211 to isolate the internal environment of the battery cell 20 from an external environment. A shape of the end cover 212 may be adapted to the shape of the case 211 to match the case 211. In some embodiments, the end cover 212 may be made of a material with hardness and strength, so that the end cover 212 does not easily deform when it is pressed and collided, so that the battery cell 20 can have higher structural strength, and the safety performance can also be improved. Certainly, this embodiment does not impose a unique limitation on the material of the end cover 212. The end cover 212 may be made of a material such as copper, iron, aluminum, stainless steel, aluminum alloy, and plastic. In some embodiments, a pressure relief mechanism 29 for relieving an internal pressure when an internal pressure or temperature of the battery cell 20 reaches a threshold may be further arranged on the end cover 212. In some embodiments, an insulating baffle 28 may be further arranged on the end cover 212. The insulating baffle 28 may be configured to isolate electrical connection components inside the case 211 from the end cover 212, to lower a risk of short circuit. Optionally, a material of the insulating baffle 28 may be, but is not limited to, plastic, rubber, and the like.

The electrode assembly 23 is a component of the battery cell 20, in which an electrochemical reaction occurs. The battery cell 20 may contain one or more electrode assemblies 23. The electrode assembly 23 is mainly formed by a positive electrode plate, a negative electrode plate, and a spacer by using a winding process or a stacking process.

In some implementations, the electrode assembly 23 is of a wound structure. The positive electrode plate and the negative electrode plate are wound into the wound structure.

### In some embodiments, the electrode assembly 23 is a stacked structure.

For example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

During charging and discharging of the battery cell 20, active ions (e.g., lithium ions) are intercalated and deintercalated back and forth between the positive electrode plates and the negative electrode plates. The spacers are arranged between the positive electrode plates and the negative electrode plates, and can function to prevent short circuit between a positive electrode and a negative electrode and allow the active ions to pass through.

Each positive electrode plate may include a positive electrode current collector and a positive active material layer arranged on at least one surface of the positive electrode current collector.

For example, the positive electrode current collector has two surfaces opposite to each other in its own thickness direction, and the positive active material is arranged on either one or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the positive active material may include at least one of the following materials: a lithium-containing phosphate, a lithium transition metal oxide, and their respective modified compounds. However, the present application is not limited to these materials, and other conventional materials that can be used as the positive active material of the battery cell 20 can be also used. One of these positive active materials may be used alone, or two or more of these positive active materials may be used in combination. Examples of lithium-containing phosphates may include, but are not limited to, at least one of lithium iron phosphate (e.g., LiFePO4 (also abbreviated as LFP)), lithium iron phosphate-carbon composite, lithium manganese phosphate (e.g., LiMnPO4), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO2), lithium nickel oxide (e.g., LiNiO2), lithium manganese oxide (e.g., LiMnO2, LiMn2O4), lithium nickel cobalt oxide, lithium manganese cobalt oxide, lithium nickel manganese oxide, lithium nickel cobalt manganese oxide (e.g., LiNi1/3Co1/3Mn1/3O2 (also abbreviated as NCM333), LiNi0.5Co0.2Mn0.302 (also abbreviated as NCM523), LiNi0.5Co0.25Mn0.25O2 (also abbreviated as NCM211), LiNi0.6Co0.2Mn0.2O2 (also abbreviated as NCM622), LiNi0.8Co0.1Mn0.1O2 (also abbreviated as NCM811), lithium nickel cobalt aluminum oxide (e.g., LiNi0.85Co0.15Al0.05O2), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

### Each negative electrode plate may include a negative electrode current collector.

For example, a metal foil, a foam metal, or a composite current collector may be used as the negative electrode current collector. For example, as the metal foil, silver surface-treated aluminum or stainless steel, stainless steel, copper, aluminum, nickel, baked carbon, carbon, nickel, titanium, or the like can be used. The foam metal may be foam nickel, foam copper, foam aluminum, foam alloy, or foam carbon, etc. The composite current collector may include a polymer material substrate layer and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

For example, each negative electrode plate may include a negative electrode current collector and a negative active material arranged on at least one surface of the negative electrode current collector.

For example, the negative electrode current collector has two surfaces opposite to each other in its own thickness direction, and the negative active material is arranged on either one or both of the two opposite surfaces of the negative electrode current collector.

For example, the negative active material for the battery cell 20 that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, a tin-oxygen compound, and tin alloy. However, the present application is not limited to these materials, and other conventional materials that can be used as the positive active material of the battery cell 20 can be also used. One of these negative active materials may be used alone, or two or more of these positive active materials may be used in combination.

In some embodiments, the material of the positive electrode current collector may be aluminum, and the material of the negative electrode current collector may be copper.

In some implementations, the spacer is a separator. The type of the separator is not particularly limited in the present application, and any well-known separator having good chemical stability, mechanical stability, and a porous structure may be selected.

As an example, the main material of the separator may be selected from at least one of glass fiber, non-woven fabric, polyethylene, polypropylene, polyvinylidene fluoride, and ceramic. The separator may be a single-layer film, or may be a multi-layer composite film, which is not particularly limited. When the separator is the multi-layer composite film, a material in each layer may be same or different, which is not particularly limited. The spacer may be a separate component located between the positive electrode plate and the negative electrode plate, or may be attached to surfaces of the positive electrode plate and the negative electrode plate.

In some implementations, the spacer is a solid electrolyte. The solid electrolyte is arranged between the positive electrode plate and the negative electrode plate and plays a role of transmitting ions and isolates the positive electrode from the negative electrode.

In some implementations, the battery cell 20 further includes an electrolyte. The electrolyte plays a role of conducting ions between the positive electrode and the negative electrode. The present application does not impose a specific limitation on the type of the electrolyte, and can select the electrolyte according to a need. The electrolyte may be in a liquid state, a gel state, or a solid state.

The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. An ether solvent may also be used as the solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, or cellulose, etc.

As an example, the inorganic solid electrolyte may be one or more of an oxide solid electrolyte (crystalline perovskite, sodium superionic conductor, garnet, amorphous LiPON film), a sulfide solid electrolyte (crystalline lithium superionic conductor (lithium germanium phosphorus sulfur, sulfide silver germanium ore), amorphous sulfide), a halide solid electrolyte, a nitride solid electrolyte, and a hydride solid electrolyte.

For example, the composite solid electrolyte is formed by adding an inorganic solid electrolyte filler into a polymer solid electrolyte.

In some implementations, the electrode assembly 23 may be cylindrical, flat, polyprismatic, or the like.

In some implementations, the electrode assembly 23 is provided with a tab 231. The tab 231 may conduct current out from the electrode assembly 23. The tab 231 includes a positive tab and a negative tab.

The electrode terminal 22 is a component electrically connected to the electrode assembly 23 to output electrical energy of the battery cell 20 or to input electrical energy to the battery cell 20. The electrode terminal 22 may be arranged on the end cover 212. A part of the electrode terminal 22 extends into the internal environment of the battery cell 20 and is directly or indirectly connected to the tab 231 of the electrode assembly 23, and the other part of the electrode terminal 22 is exposed to the external environment of the battery cell 20 and is connected to a component such as the busbar and a sampling device. Optionally, the electrode terminal 22 may be of a columnar structure, such as a cylindrical structure and a prismatic structure. The electrode terminal 22 may also be of a plate-like structure, such as a round plate and a square plate. The electrode terminal 22 may also be of another irregular three-dimensional structure. These are not specifically limited here. The electrode terminal 22 may be made of a metal material or various metal materials. The metal material may be, but is not limited to, copper, aluminum, nickel, zinc, iron, and the like, and is not specifically limited here.

In order to explain the technical solutions provided by the present application, specific accompanying drawings and embodiments will be described in detail below.

In a first aspect, an embodiment of the present application provides a battery cell 20. Referring to FIG. 3 to FIG. 6, the battery cell 20 includes an electrode assembly 23, a shell 21, and an electrode terminal 22. The electrode assembly 23 is at least partially accommodated in the shell 21. The electrode terminal 22 is electrically connected to the electrode assembly 23. The electrode terminal 22 is arranged on a wall portion of the shell 21. The electrode terminal 22 includes a first metal layer 221 and a second metal layer 222 that are made of different materials. In the thickness direction of the wall portion, the first metal layer 221 is located on one side of the second metal layer 222 facing the electrode assembly 23. The first metal layer 221 and the second metal layer 222 are connected to form a connecting interface 223. At least a part of the connecting interface 223 is a curved surface.

The wall portion of the shell 21 may be any wall of a case 211, such as a side wall of the case 211 and a bottom wall of the case 211, or may be a cover plate of the end cover 212, which is not specifically limited here.

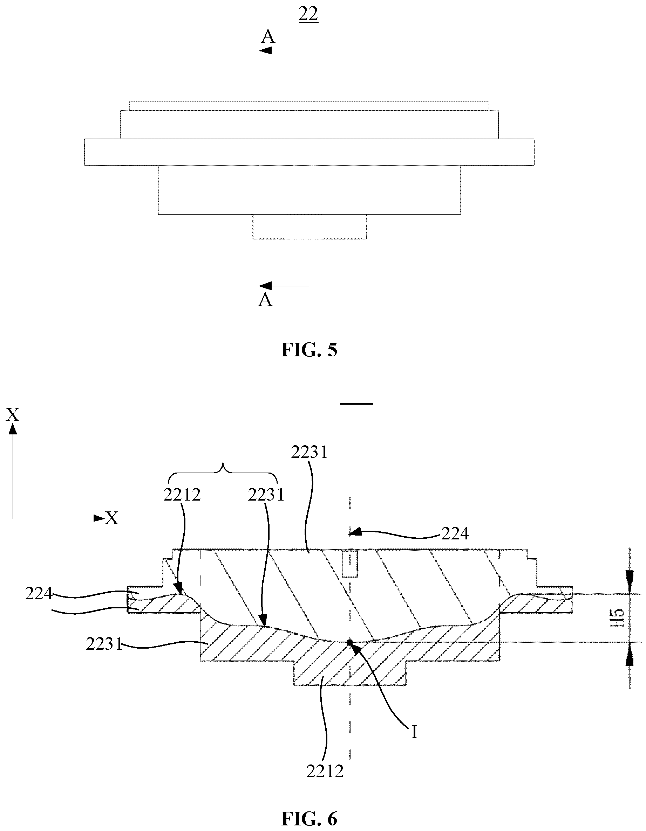

A material of the first metal layer 221 is different from a material of the second metal layer 222. A type of a metal material for making the first metal layer 221 is mainly determined according to a material of a component connected to the first metal layer 221. Similarly, a type of a metal material for making the second metal layer 222 is mainly determined according to a material of a component connected to the second metal layer 222. For example, if the material of the component connected to the first metal layer 221 is copper, the material of the first metal layer 221 is copper, and if the material of the component connected to the second metal layer 222 is aluminum, the material of the second metal layer 222 is aluminum. For another example, if the material of the component connected to the first metal layer 221 is copper, the material of the first metal layer 221 is copper, and if the material of the component connected to the second metal layer 222 is nickel, the material of the second metal layer 222 is nickel. The first metal layer 221 and the second metal layer 222 are distributed in the thickness direction of the wall portion of the shell 21 (refer to an X direction shown in FIG. 6). Specifically, the first metal layer 221 is located on one side of the second metal layer 222 facing the electrode assembly 23. At least a part of the first metal layer 221 is located in an internal environment of the battery cell 20, and at least a part of the second metal layer 222 is exposed to an external environment of the battery cell 20, so that the first metal layer 221 and the second metal layer 222 are respectively connected to corresponding components. For example, the first metal layer 221 is connected to the electrode assembly 23, and the second metal layer 222 is connected to a busbar.

The connecting interface 223 is an interface formed by parts of the first metal layer 221 and the second metal layer 222 that are in contact with each other. The connecting interface 223 is at least partially a curved surface. In other words, the connecting interface 223 may be entirely composed of a curved surface, or the connecting interface 223 may be composed of a curved surface and a plane. For example, a middle part of the connecting interface 223 is the curved surface, and a peripheral part of the connecting interface 223 is the plane. Or, the connecting interface 223 may be composed of a curved surface and an inclined surface. For example, a middle part of the connecting interface 223 is the curved surface, and a peripheral part of the connecting interface 223 is the inclined surface. Optionally, the curved surface may be a regular curved surface, such as a spherical surface and a paraboloid, or an irregular curved surface, which is not specifically limited here.

In some embodiments, the first metal layer 221 and the second metal layer 222 are integrally connected by stamping. Specifically, in a stamping process, in order to enable at least a part of the connecting interface 223 to be formed into the curved surface, a surface of the first metal layer 221 facing away from the second metal layer 222 in the above thickness direction can be stamped to form an uneven surface such as a steplike surface and a curved surface, and a surface of the second metal layer 222 facing away from the first metal layer 221 in the above thickness direction can be stamped to form a plane, or a surface of the second metal layer 222 facing away from the first metal layer 221 in the above thickness direction can be stamped to form an uneven surface such as a steplike surface and a curved surface, and a surface of the first metal layer 221 facing away from the second metal layer 222 in the above thickness direction can be stamped to form a plane, or a surface of the first metal layer 221 facing away from the second metal layer 222 in the above thickness direction and a surface of the second metal layer 222 facing away from the first metal layer 221 in the above thickness direction are both stamped to form uneven surfaces such as steplike surfaces and curved surfaces. Thus, in a stamping direction, any multiple parts of the first metal layer 221 or any multiple parts of the second metal layer 222 move in different amplitudes under the action of a pressure, so that at least a part of the connecting interface 223 between the first metal layer 221 and the second metal layer 222 is formed into a curved surface.

In some other embodiments, a first surface structure can be first formed on the first metal layer 221, and a second surface structure can be formed on the second metal layer 222. At least a part of the first surface structure and at least a part of the second surface structure are both curved surfaces, and the first surface structure and the second surface structure can be in concave-convex fit. After the first surface structure and the second surface structure are connected in an abutting manner, the above connecting interface 223 is formed, thereby integrally connecting the first metal layer 221 with the second metal layer 222. Optionally, a way of connection between the first surface structure and the second surface structure may be, but is not limited to, friction welding, bonding, and the like, which is not specifically limited here.

According to the electrode terminal 22 provided in this embodiment of the present application, at least a part of the connecting interface 223 between the first metal layer 221 and the second metal layer 222 that are made of different materials is set to be the curved surface, so that a connecting area between the first metal layer 221 and the second metal layer 222 is effectively enlarged, which effectively enhances strength of connection between the first metal layer 221 and the second metal layer 222, lowers a risk of breakage of the electrode terminal 22, and is beneficial to improving performance of the battery cell 20.

In some embodiments of the present application, referring to FIG. 6, the electrode terminal 22 has a first central axis 224 parallel to the thickness direction of the wall portion; the connecting interface 223 includes a first connecting surface 2231 and a second connecting surface 2232 located at the periphery of the first connecting surface 2231; the first central axis 224 passes through the first connecting surface 2231; and the first connecting surface 2231 is a curved surface.

The electrode terminal 22 may be of a rotationally symmetrical structure. For example, the electrode terminal 22 is of a cylindrical structure. The electrode terminal 22 may alternatively be of a non-rotationally symmetrical structure. For example, the electrode terminal 22 is of a square columnar structure, a prismatic structure, and the like. This is not specifically limited here.

The first connecting surface 2231 is the middle part of the connecting interface 223, and the second connecting surface 2232 is the peripheral part of the connecting interface 223. The second connecting surface 2232 may be of a ringlike structure, and the second connecting surface 2232 is annularly arranged at the first connecting surface 2231. There may be various ringlike structures. For example, if the projection of the first connecting surface 2231 in the thickness direction of the wall portion is a circle, the projection of the second connecting surface 2232 in the thickness direction of the wall portion is a circular ring. For another example, if the projection of the first connecting surface 2231 in the thickness direction of the wall portion is a square, the projection of the second connecting surface 2232 in the thickness direction of the wall portion is a square ring.

The first connecting surface 2231 is the middle part of the connecting interface 223, and the second connecting surface 2232 is the peripheral part of the connecting interface 223. This is based on distances from both the first connecting surface 2231 and the second connecting surface 2232 to the first central axis 224. The first connecting surface 2231 is the middle part of the connecting interface 223, which means that the first connecting surface 2231 is closer to the first central axis 224 than the second connecting surface 2232, and it is not limited that a center of the first connecting surface 2231 is located on the first central axis 224. The center of the first connecting surface 2231 may be spaced apart from the first central axis 224.

In some embodiments, the first connecting surface 2231 is a curved surface, and the second connecting surface 2232 is a plane.

In some other embodiments, the first connecting surface 2231 is a curved surface, and the second connecting surface 2232 is an inclined surface.

In still some other embodiments, the first connecting surface 2231 and the second connecting surface 2232 are both curved surfaces.

Optionally, the curved surface may be a regular curved surface, such as a spherical surface and a paraboloid, or an irregular curved surface, which is not specifically limited here.

By using the above technical solution, the middle part of the connecting interface 223 is the curved surface, which ensures that a sufficient connecting area between a middle part of the first metal layer 221 and a middle part of the second metal layer 222, thereby effectively enhancing the strength of connection between the first metal layer 221 and the second metal layer 222 and lowering the risk of breakage of the electrode terminal 22.

In some embodiments of the present application, the first connecting surface 2231 has a second central axis parallel to the thickness direction; and the second central axis overlaps the first central axis 224.

The first connecting surface 2231 may be of a rotationally symmetrical structure. For example, the projection of the first connecting surface 2231 in the thickness direction of the wall portion is of a circular structure. The first connecting surface 2231 may alternatively be a non-rotationally symmetrical structure. For example, the projection of the first connecting surface 2231 in the thickness direction of the wall portion is of an elliptical structure, a square structure, or the like. This is not specifically limited here.

By using the above technical solution, a force on a joint between the first metal layer 221 and the second metal layer 222 in a circumferential direction of the electrode terminal 22 is more uniform, and meanwhile, the connecting area between the middle part of the first metal layer 221 and the middle part of the second metal layer 222 can be further enlarged, thereby further enhancing the strength of connection between the first metal layer 221 and the second metal layer 222 and further lowering the risk of breakage of the electrode terminal 22.

In some embodiments of the present application, referring to FIG. 6, the first metal layer 221 is a copper layer; the second metal layer 222 is an aluminum layer; and in the thickness direction of the wall portion, the first connecting surface 2231 is recessed relative to the second connecting surface 2232 in a direction close to the electrode assembly 23.

During actual use, a material of a negative electrode plate of the electrode assembly 23 is usually copper, and correspondingly, a material of a tab 231 of the negative electrode plate is also copper. A material of the busbar is usually aluminum. The first metal layer 221 of the above electrode terminal 22 is a copper layer and the second metal layer 222 is an aluminum layer. In other words, the material of the first metal layer 221 is copper, and the material of the second metal layer 222 is aluminum. The first metal layer 221 can be connected to the tab 231 of the negative electrode plate of the electrode assembly 23, and the second metal layer 222 can be connected to the busbar.

The first connecting surface 2231 is recessed relative to the second connecting surface 2232 toward the direction close to the electrode assembly 23, which means that the overall first connecting surface 2231 protrudes in the direction close to the electrode assembly 23. The first connecting surface 2231 may be a smoothly transitioned concave surface, or may be a concave surface with an undulating structure.

By using the above technical solution, consumption of the material of the first metal layer 221 can be effectively reduced, thereby effectively reducing the manufacturing costs of the electrode terminal 22.

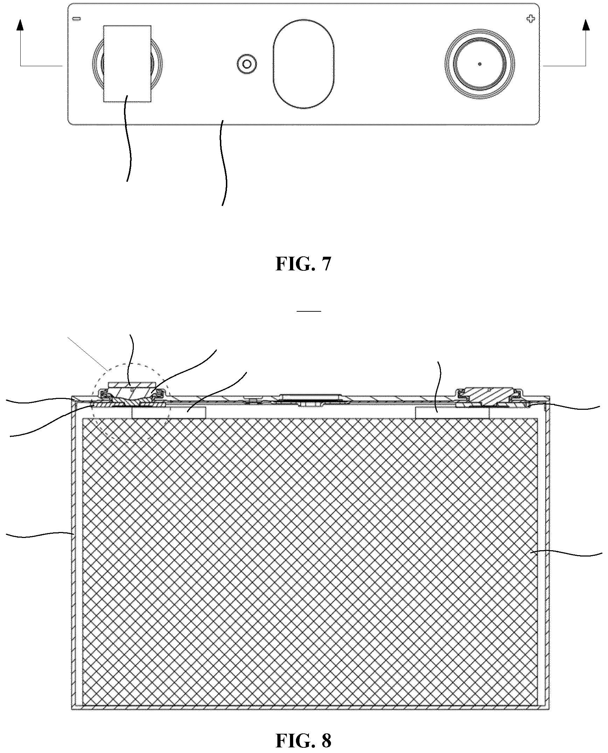

In some embodiments of the present application, referring to FIG. 7 to FIG. 9 together, the battery cell 20 further includes an adapter 24. The adapter 24 is configured to connect the electrode assembly 23 with the first metal layer 221, to electrically connect the electrode assembly 23 with the electrode terminal 22; the first metal layer 221 includes a first connecting portion 2211 for connecting the adapter 24; and at least a part of the first connecting portion 2211 is arranged opposite to the first connecting surface 2231.

The adapter 24 is configured to connect the electrode assembly 23 with the first metal layer 221 to electrically connect the electrode assembly 23 with the electrode terminal 22. In other words, the adapter 24 is a conductive connecting medium between the electrode assembly 23 and the electrode terminal 22. The adapter 24 plays a role of leading a current of the electrode assembly 23 to the electrode terminal 22, to achieve electrical connection between the electrode assembly 23 and the electrode terminal 22. Optionally, a material of the adapter 24 may be, but is not limited to, copper, iron, aluminum, steel, aluminum alloy, or the like.

The first connecting portion 2211 is a part of the first metal layer 221 configured to be connected with the adapter 24. At least a part of the first connecting portion 2211 is arranged opposite to the first connecting surface 2231, which means that at least a part of the first connecting portion 2211 and the first connecting surface 2231 are arranged in sequence in the thickness direction of the wall portion.

During actual use, in a case that the first connecting portion 2211 is connected to the adapter 24, the adapter 24 can generate a pulling force on the first metal layer 221 and to the electrode assembly 23. Under the action of the pulling force, compared with other parts of the connecting interface 223, the part of the connecting interface 223 opposite to the first connecting portion 2211 is more prone to breakage. At least a part of the first connecting portion 2211 is arranged opposite to the first connecting surface 2231. Since the first connecting surface 2231 is the curved surface with a large area, the strength of connection of a portion, corresponding to the first connecting surface 2231, of the joint between the first metal layer 221 and the second metal layer 222 is high, which can effectively counteract the pulling force of the adapter 24 on the first metal layer 221, thereby further lowering the risk of breakage of the electrode terminal 22.

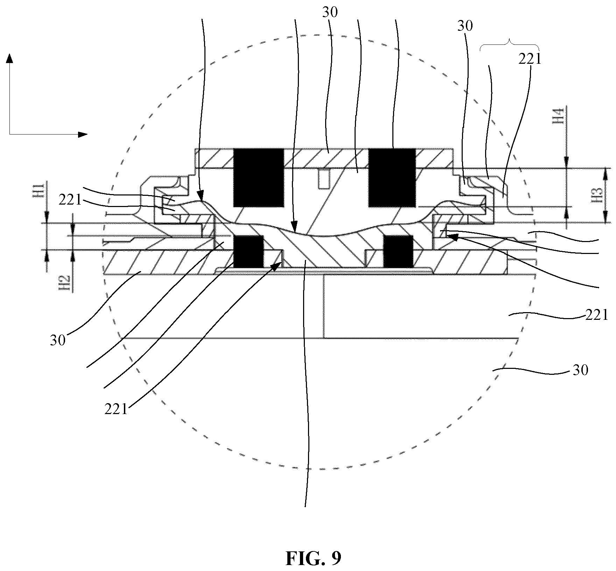

In some embodiments of the present application, referring to FIG. 9, the first connecting portion 2211 and the adapter 24 are welded and fixed, and a first welding mark 225 is formed.

The first welding mark 225 is formed by welding the first connecting portion 2211 to the adapter 24. At least a part of the first welding mark 225 is embedded into the first connecting portion 2211. At least a part of the first welding mark 225 is embedded into the adapter 24. At least a part of the first welding mark 225 is located between the first connecting portion 2211 and the adapter 24, to connect the first connecting portion 2211 with the adapter 24.

By using the above technical solution, it is convenient to connect the electrode terminal 22 with the adapter 24.

In some embodiments of the present application, referring to FIG. 9, the first welding mark 225 does not exceed the first connecting surface 2231 in a direction (refer to an X direction shown in FIG. 9) from the electrode assembly 23 to the electrode terminal 22.

In other words, in the direction from the electrode assembly 23 to the electrode terminal 22, the thickness of the part of the first welding mark 225 embedded into the first connecting portion 2211 is less than the thickness of the first connecting portion 2211, so that the first welding mark 225 cannot extend through the first connecting portion 2211 to the first connecting surface 2231.

By using the above technical solution, the connecting interface 223 can be prevented from being damaged, so as to ensure the strength of connection between the first metal layer 221 and the second metal layer 222, thereby further lowering the risk of breakage of the electrode terminal 22.

In some embodiments of the present application, referring to FIG. 9, in the thickness direction of the wall portion, the thickness of the part of the first connecting portion 2211 located at the first welding mark 225 is H1, and the thickness of the part of the first welding mark 225 located at the first connecting portion 2211 is H2, 0.6≤H2/H1≤0.9.

A value of H2/H1 may be specifically 0.6, 0.7, 0.8, 0.9, or the like, and is not specifically limited here. If the value of H2/H1 is too small, a depth of the first welding mark 225 embedded into the first connecting portion 2211 is small, causing insufficient strength of connection between the first connecting portion 2211 and the adapter 24. If the value of H2/H1 is too large, the depth of the first welding mark 225 embedded into the first connecting portion 2211 is large, easily causing the first welding mark 225 to extend through the first connecting portion 2211 to the first connecting surface 2231, thereby resulting in insufficient strength of connection between the first metal layer 221 and the second metal layer 222.

By using the above technical solution, a risk that the first connecting portion 2211 is welded through to damage the connecting interface 223 can be lowered, and the strength of connection between the first metal layer 221 and the second metal layer 222 can be effectively guaranteed, thereby further lowering the risk of breakage of the electrode terminal 22. Meanwhile, a connection relationship between a part of the second metal layer 222 and the adapter 24 caused by the fact that the first connecting portion 2211 is welded through can be prevented, thereby ensuring the strength of connection between the first connecting portion 2211 and the adapter 24.

In some embodiments of the present application, referring to FIG. 9 to FIG. 11 together, a positioning structure is arranged between the first metal layer 221 and the adapter 24; and the first welding mark 225 is arranged at the periphery of the positioning structure.

The positioning structure is configured to limit a relative position between the first metal layer 221 and the adapter 24. Optionally, the positioning structure may be of a concave-convex fit structure, a clamping positioning structure, a snap-fit positioning structure, or the like. This is not specifically limited here.

In some embodiments, the first welding mark 225 may be arranged at any position on the periphery of the positioning structure. For example, the first welding mark 225 is a welding spot, and the welding spot is arranged on a peripheral side of the positioning structure.

In some other embodiments, the first welding mark 225 may be annularly arranged at the positioning structure. For example, the first welding mark 225 is a plurality of welding spots, and the plurality of welding spots are distributed in sequence in a peripheral direction of the positioning structure. For another example, the first welding mark 225 is of a ringlike structure, and the first welding mark 225 surrounds the positioning structure.

By using the above technical solution, a relative position between the adapter 24 and the electrode terminal 22 is effectively limited, thereby improving a situation of mutual displacement during connection of the adapter 24 and the electrode terminal 22, and effectively ensuring an effect of the connection between the adapter 24 and the electrode terminal 22. Meanwhile, it can improve a situation of interference occurring between the first welding mark 225 and the positioning structure, thus effectively enlarging a coverage area of the first welding mark 225 and effectively enhancing the strength of connection between the electrode terminal 22 and the adapter 24.

In some embodiments of the present application, referring to FIG. 9 to FIG. 11, the positioning structure includes a protrusion 2212 and a recess 241 which are matched with each other; one of the first metal layer 221 and the adapter 24 is provided with the protrusion 2212; and the other one of the first metal layer 221 and the adapter 24 is provided with the recess 241.

In some embodiments, the first metal layer 221 is provided with a protrusion 2212. The protrusion 2212 can be arranged on the first connecting portion 2211 or at another part of the first metal layer 221. The protrusion 2212 protrudes in a direction from the electrode terminal 22 to the electrode assembly 23. The adapter 24 is provided with a recess 241. The recess 241 is recessed in the direction from the electrode terminal 22 to the electrode assembly 23 or penetrates through the adapter 24.

In some other embodiments, the first metal layer 221 is provided with a recess 241. The recess 241 can be arranged on the first connecting portion 2211 or at another part of the first metal layer 221. The recess 241 is recessed in a direction from the electrode assembly 23 to the electrode terminal 22, but does not penetrate through the first metal layer 221. The adapter 24 is provided with a protrusion 2212. The protrusion 2212 protrudes in the direction from the electrode assembly 23 to the electrode terminal 22.

It can be understood that a plurality of the protrusions 2212 and a plurality of the recesses 241 may be provided. The plurality of protrusions 2212 and the plurality of recesses 241 are arranged in a one-to-one correspondence manner.

During assembling, the protrusion 2212 is inserted into the recess 241, to limit relative movement between the electrode terminal 22 and the adapter 24 in a circumferential direction of the electrode terminal 22, and then the first connecting portion 2211 and the adapter 24 are welded to complete a connecting operation on the electrode terminal 22 and the adapter 24.

By using the above technical solution, it is convenient to limit the relative position between the adapter 24 and the electrode terminal 22.

In some embodiments of the present application, referring to FIG. 9 to FIG. 11 together, the first metal layer 221 is provided with the protrusion 2212; the adapter 24 is provided with the recess 241; and the recess 241 is a through hole penetrating through the adapter 24.

It can be understood that the recess 241 is a through hole penetrating through the adapter 24 in the thickness direction of the wall portion.

By using the above technical solution, it is convenient to limit the relative position between the adapter 24 and the electrode terminal 22.

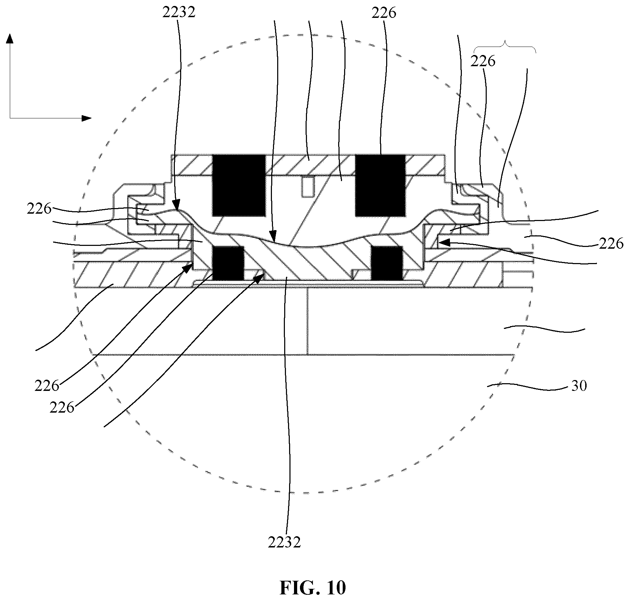

In some embodiments of the present application, referring to FIG. 10, the adapter 24 is provided with a groove 242; the recess 241 penetrates through the bottom of the groove 242; and the first welding mark 225 is arranged at the bottom of the groove 242 and is spaced apart from the recess 241.

The groove 242 is recessed in the direction from the electrode terminal 22 to the electrode assembly 23. The recess 241 is arranged at the bottom of the groove 242 and penetrates through the bottom of the groove 242. The first welding mark 225 is arranged at the bottom of the groove 242. In other words, the protrusion 2212 is inserted into the recess 241 via the groove 242. At least a part of the first connecting portion 2211 is arranged in the groove 242 and is welded to the bottom of the groove 242 to form the first welding mark 225. Meanwhile, the first welding mark 225 is spaced apart from the recess 241 in the circumferential direction of the positioning structure.

By using the above technical solution, it is convenient to limit a relative position between the adapter 24 and the electrode terminal 22. Meanwhile, it can improve a situation of interference occurring between the first welding mark 225 and the positioning structure, thus effectively enlarging a coverage area of the first welding mark 225 and effectively enhancing the strength of connection between the electrode terminal 22 and the adapter 24.

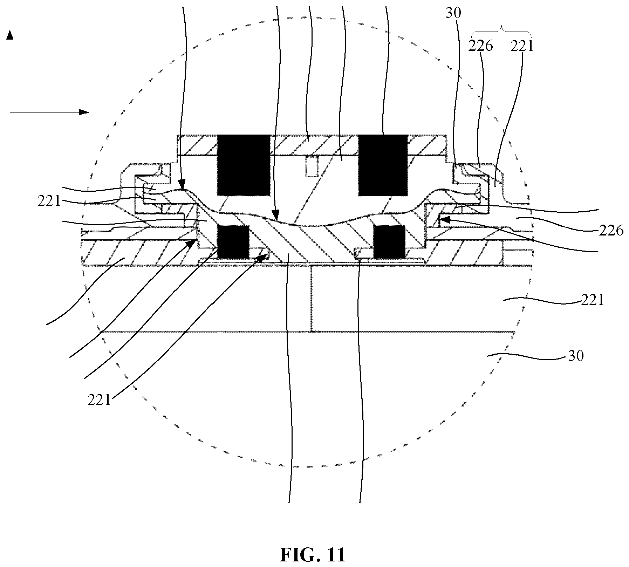

In some embodiments of the present application, referring to FIG. 11, the adapter 24 is provided with a groove 242; the recess 241 penetrates through the bottom of the groove 242; and the protrusion 2212 passes through the recess 241 and is fixedly connected to one side, facing the electrode assembly 23, of the bottom of the groove 242.

It can be understood that after the protrusion 2212 passes through the recess 241, at least a part of the protrusion 2212 extends out of the recess 241 in the direction from the electrode terminal 22 to the electrode assembly 23, and the part of the protrusion 2212 extending out of the recess 241 is connected to the side, facing the electrode assembly 23, of the bottom of the groove 242. Specifically, a fourth connecting portion 22121 is arranged on one side of the protrusion 2212 facing away from the second metal layer 222. The fourth connecting portion 22121 is connected to the side, facing the electrode assembly 23, of the bottom of the groove 242. A way of connection between the fourth connecting portion 22121 and the bottom of the groove 242 may be but is not limited to riveting, welding, bonding, or the like. This is not specifically limited here.

By using the above technical solution, it is convenient to limit the relative position between the adapter 24 and the electrode terminal 22. Meanwhile, the strength of connection between the electrode terminal 22 and the adapter 24 is effectively enhanced under the dual action of the connection between the first connecting portion 2211 and the adapter 24, and the connection between the protrusion 2212 and the bottom of the groove 242.

In some embodiments of the present application, referring to FIG. 9, the second metal layer 222 includes a second connecting portion 2221 configured to be connected to an external busbar 30; and at least a part of the second connecting portion 2221 is arranged opposite to the first connecting surface 2231.

The second connecting portion 2221 is a part of the first metal layer 221 configured to be connected with the external busbar 30. At least a part of the second connecting portion 2221 is arranged opposite to the first connecting surface 2231, which means that at least a part of the second connecting portion 2221 and the first connecting surface 2231 are arranged in sequence in the thickness direction of the wall portion.

During actual use, in a case that the second connecting portion 2221 is connected to the external busbar 30, the external busbar 30 can generate a pulling force on the second metal layer 222 and in a direction away from the electrode assembly 23. Under the action of the pulling force, compared with other parts of the connecting interface 223, the part of the connecting interface 223 opposite to the second connecting portion 2221 is more prone to breakage. At least a part of the second connecting portion 2221 is arranged opposite to the first connecting surface 2231. Since the first connecting surface 2231 is the curved surface with a large area, the strength of connection of a portion, corresponding to the first connecting surface 2231, of the joint between the first metal layer 221 and the second metal layer 222 is high, which can effectively counteract the pulling force of the external busbar 30 on the second metal layer 222, thereby further lowering the risk of breakage of the electrode terminal 22.

In some embodiments of the present application, referring to FIG. 9, the second connecting portion 2221 and the external busbar 30 are welded and fixed, and a second welding mark 226 is formed.

The second welding mark 226 is formed by welding the second connecting portion 2221 to the external busbar 30. At least a part of the second welding mark 226 is embedded into the second connecting portion 2221. At least a part of the second welding mark 226 is embedded into the external busbar 30. At least a part of the second welding mark 226 is located between the second connecting portion 2221 and the external busbar 30, to connect the second connecting portion 2221 with the external busbar 30.

By using the above technical solution, it is convenient to connect the electrode terminal 22 with the external busbar 30.

In some embodiments of the present application, referring to FIG. 9, the second welding mark 226 does not exceed the first connecting surface 2231 in a direction from the electrode terminal 22 to the electrode assembly 23 (refer to a direction opposite to the X direction shown in FIG. 9).

In other words, in the direction from the electrode assembly 23 to the electrode terminal 22, the thickness of the part of the second welding mark 226 embedded into the second connecting portion 2221 is less than the thickness of the second connecting portion 2221, so that the second welding mark 226 cannot extend through the second connecting portion 2221 to the first connecting surface 2231.

By using the above technical solution, the connecting interface 223 can be prevented from being damaged, so as to ensure the strength of connection between the first metal layer 221 and the second metal layer 222, thereby further lowering the risk of breakage of the electrode terminal 22.

In some embodiments of the present application, referring to FIG. 9, in the thickness direction, the thickness of the part of the second connecting portion 2221 located at the second welding mark 226 is H3, and the thickness of the part of the second welding mark 226 located at the second connecting portion 2221 is H4, 0.6≤H4/H3≤0.9.

A value of H4/H3 may be specifically 0.6, 0.7, 0.8, 0.9, or the like, and is not specifically limited here. If the value of H4/H3 is too small, a depth of the second welding mark 226 embedded into the second connecting portion 2221 is small, causing insufficient strength of connection between the second connecting portion 2221 and the external busbar 30. If the value of H4/H3 is too large, the depth of the second welding mark 226 embedded into the second connecting portion 2221 is large, easily causing the second welding mark 226 to extend through the second connecting portion 2221 to the first connecting surface 2231, thereby resulting in insufficient strength of connection between the first metal layer 221 and the second metal layer 222.

By using the above technical solution, a risk that the second connecting portion 2221 is welded through to damage the connecting interface 223 can be lowered, and the strength of connection between the first metal layer 221 and the second metal layer 222 can be effectively guaranteed, thereby further lowering the risk of breakage of the electrode terminal 22. Meanwhile, a connection relationship between a part of the second metal layer 222 and the external busbar 30 caused by the fact that the second connecting portion 2221 is welded through can be prevented, thereby ensuring the strength of connection between the second connecting portion 2221 and the external busbar 30.

In some embodiments of the present application, referring to FIG. 6, the second connecting surface 2232 is a curved surface.

Optionally, the curved surface may be a regular curved surface, such as a spherical surface and a paraboloid, or an irregular curved surface, which is not specifically limited here.

By using the above technical solution, an area of the connecting interface 223 can be further enlarged, thus further enhancing the strength of connection between the first metal layer 221 and the second metal layer 222 and further lowering the risk of breakage of the electrode terminal 22.

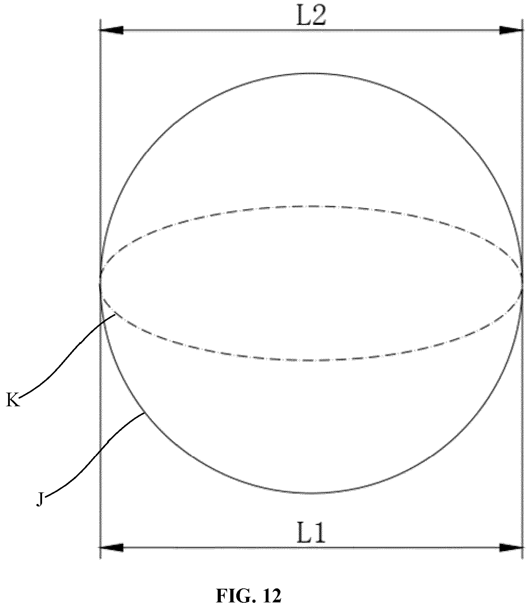

In some embodiments of the present application, referring to FIG. 12, the electrode terminal 22 has a first central axis 224 parallel to the thickness direction; the connecting interface 223 has a second central axis parallel to the thickness direction of the wall portion; the second central axis overlaps the first central axis 224; a projection K of the connecting interface 223 in the thickness direction of the wall portion has a first length L1 in a first direction; a projection J of the electrode terminal 22 in the thickness direction of the wall portion has a second length L2 in the first direction; the first length L1 is equal to the second length L2; and the first direction passes through the first central axis 224 of the electrode terminal 22 and is perpendicular to the thickness direction of the wall portion.

A plane perpendicular to the thickness direction of the wall portion is defined as a projection plane, and two points of a peripheral edge of the projection of the connecting interface 223 on the projection plane in the first direction overlaps a peripheral edge of the projection of the electrode terminal 22 on the projection plane, namely, two opposite sides of the connecting interface 223 in the first direction extend to the peripheral edge of the electrode terminal 22.

The first direction may be any direction passing through the first central axis 224 of the electrode terminal 22 and perpendicular to the thickness direction of the wall portion, such as a Y direction shown in FIG. 6.

By using the above technical solution, an area of the connecting interface 223 can be further enlarged, thus further enhancing the strength of connection between the first metal layer 221 and the second metal layer 222 and further lowering the risk of breakage of the electrode terminal 22.

In some embodiments of the present application, the projection of the peripheral edge of the connecting interface 223 in the thickness direction of the wall portion overlaps the projection of the peripheral edge of the electrode terminal 22 in the thickness direction of the wall portion.

In other words, the projection of the connecting interface 223 on the projection plane completely overlaps the projection of the electrode terminal 22 on the projection plane, namely, the peripheral edge of the connecting interface 223 overlaps the peripheral edge of the electrode terminal 22.

By using the above technical solution, an area of the connecting interface 223 can be maximized, thus further enhancing the strength of connection between the first metal layer 221 and the second metal layer 222 and further lowering the risk of breakage of the electrode terminal 22.

The first direction can be set according to a specific shape of the wall portion.

In some embodiments of the present application, the projection of the wall portion in the thickness direction is a rectangle, and the first direction is the length direction or width direction of the wall portion.

In some other embodiments of the present application, the projection of the wall portion in the thickness direction is a circular ring, and the first direction is the radial direction of the wall portion.

In some embodiments of the present application, referring to FIG. 6, a distance between the point I of the connecting interface 223 closest to the electrode assembly 23 and the first central axis 224 of the electrode terminal 22 is less than or equal to 6 mm.

The point of the connecting interface 223 closest to the electrode assembly 23 is a point, which is spaced apart from the electrode assembly 23 by a shortest distance, in the connecting interface 223. The distance between this point and the first central axis 224 of the electrode terminal 22 means a straight-line distance between this point and the first central axis 224 of the electrode terminal 22. The straight-line distance may be specifically 1 mm, 2 mm, 3 mm, 4 mm, 5 mm, 6 mm, or the like, and can be determined according to an actual need.

By using the above technical solution, the part having a relatively large area of the connecting interface 223 is made as close as possible to the first central axis 224 of the electrode terminal 22, so as to increase a connecting force of the part, close to the first central axis 224 of the electrode terminal 22, of the joint between the first metal layer 221 and the second metal layer 222, thereby further enhancing the strength of connection between the first metal layer 221 and the second metal layer 222 and further lowering the risk of breakage of the electrode terminal 22.

In addition, in a case that the first metal layer 221 is the copper layer and the second metal layer 222 is the aluminum layer, by using the above technical solution, consumption of the material of the first metal layer 221 can be further reduced, thereby further reducing the manufacturing costs of the electrode terminal 22.

In some embodiments of the present application, the point I of the connecting interface 223 closest to the electrode assembly 23 is located on the first central axis 224.

By using the above technical solution, the part of the connecting interface 223 close to the first central axis 224 of the electrode terminal 22 has a relatively large area, to increase a connecting force of the part, located on the first central axis 224 of the electrode terminal 22, of the joint between the first metal layer 221 and the second metal layer 222, thereby further enhancing the strength of connection between the first metal layer 221 and the second metal layer 222 and further lowering the risk of breakage of the electrode terminal 22.

In addition, in a case that the first metal layer 221 is the copper layer and the second metal layer 222 is the aluminum layer, by using the above technical solution, consumption of the material of the first metal layer 221 can be still further reduced, thereby still further reducing the manufacturing costs of the electrode terminal 22.

In some embodiments of the present application, referring to FIG. 6, in the thickness direction of the wall portion, a distance between the point of the connecting interface 223 farthest from the electrode assembly 23 and the point of the connecting interface 223 closest to the electrode assembly 23 is H5, 1 mm ≤ H5 ≤ 10 mm.

It can be understood that the distance H5 between the point of the connecting interface 223 farthest from the electrode assembly 23 and the point of the connecting interface 223 closest to the electrode assembly 23 is a height of the connecting interface 223 in the thickness direction of the wall portion. The distance H5 may be specifically 1 mm, 2 mm, 3 mm, 4 mm, 5 mm, 6 mm, 7 mm, 8 mm, 9 mm, or 10 mm, which can be specifically determined according to an actual need.

By using the above technical solution, the height of the connecting interface 223 in the thickness direction of a wall body is not too small, so that the area of the connecting interface 223 is effectively ensured, thereby ensuring the strength of connection between the first metal layer 221 and the second metal layer 222 and lowering the risk of breakage of the electrode terminal 22. Meanwhile, the height of the connecting interface 223 in the thickness direction of the wall body is not too large, thereby ensuring that the first metal layer 221 and the second metal layer 222 have sufficient thicknesses to lower a risk that the first metal layer 221 penetrates through the second metal layer 222 or the second metal layer 222 penetrates through the first metal layer 221, which is beneficial to improving the performance of the battery cell 20.

In some embodiments of the present application, referring to FIG. 9 to FIG. 11 together, the battery cell 20 further includes an insulating member 25 and a fixing member 26; the wall portion is provided with an electrode lead-out hole 2121; the fixing member 26 is connected to the wall portion and is arranged around the electrode lead-out hole 2121; at least a part of the electrode terminal 22 is accommodated in an accommodating space 13 defined by the fixing member 26; the insulating member 25 is arranged between the fixing member 26 and the electrode terminal 22; and the fixing member 26 presses the electrode terminal 22 through the insulating member 25, so that the electrode terminal 22 is fixed to the wall portion.

The fixing member 26 means a component that protrudes out of a surface of the wall portion of the shell 21 and is arranged around the electrode lead-out hole 2121. The electrode terminal 22 is at least partially located in a space enclosed by the fixing member 26. It can be understood that the electrode terminal 22 may be partially or entirely located in the space enclosed by the fixing member 26. The electrode terminal 22 may be electrically connected to the adapter 24 through the electrode lead-out hole 2121, and then electrically connected to the electrode assembly 23, to output electrical energy of and input electrical energy to the battery cell 20. For example, the first connecting portion 2211 of the first metal layer 221 passes through the electrode lead-out hole 2121 and is connected to the electrode assembly 23 through the adapter 24. Certainly, in other implementations, at least a part of the adapter 24 passes through the electrode lead-out hole 2121 and is electrically connected to the electrode terminal 22. In some embodiments, an insulating baffle 28 is further arranged between the adapter 24 and the wall portion, and the insulating baffle 28 insulates and separates the adapter 24 from the wall portion to lower a risk of short circuit.

The fixing member 26 and the wall portion of the shell 21 are of an integrated structure. For example, the fixing member 26 and the wall portion of the shell 21 are formed by an integration process such as extrusion, injection molding, and die casting. The fixing member 26 may be of an annular integral structure, or a segmented structure annularly arranged in the circumferential direction of the electrode terminal 22. The fixing member 26 and the wall portion of the shell 21 are of an integrated structure, which can reduce assembling procedures, reduce the costs, and have good structural strength.

The fixing member 26 includes a pressing portion 261 and a third connecting portion 262. The third connecting portion 262 means a part of the fixing member 26 located between the pressing portion 261 and the wall portion of the shell 21. The third connecting portion 262 plays a role of connecting the pressing portion 261 with the wall portion of the shell 21, and can further play a role of supporting the pressing portion 261. The pressing portion 261 is a part of the fixing member 26 for applying a downward pressure to the electrode terminal 22. Under the downward pressure of the pressing portion 261, the electrode terminal 22 is fixed to the wall portion of the shell 21. The pressing portion 261 may be of an annular integral structure annularly arranged outside the electrode terminal 22, or the pressing portion 261 may be of a segmented structure annularly arranged in the circumferential direction of the electrode terminal 22.

The insulating member 25 is a component made of an insulating material. The insulating member 25 is located between the fixing member 26 and the electrode terminal 22 to insulate and separate the fixing member 26 and the electrode terminal 22, thus lowering the risk of short circuit. The insulating member 25 may be of a ringlike structure, and the insulating member 25 is annularly arranged at the electrode terminal 22. It can be understood that the insulating member 25 is made of an insulating material. Optionally, the insulating material may be but is not limited to polyester, epoxy, polyurethane, polybutadiene acid, silicone, polyesterimide, polyimide, or the like. This is not specifically limited here.

By using the above technical solution, the insulating member 25 can insulate and separate the fixing member 26 from the electrode terminal 22, to lower a risk of short circuit between the fixing member 26 and the electrode terminal 22, which is beneficial to improving the performance of the battery cell 20.

In some embodiments of the present application, referring to FIG. 9 to FIG. 11, the battery cell 20 further includes a sealing member 27. The sealing member 27 is at least partially located between the wall portion and the electrode terminal 22.

The sealing member 27 is a component that can play a sealing role. The sealing member 27 is at least partially clamped between the electrode terminal 22 and the wall portion of the shell 21. The sealing member 27 can deform under the action of a clamping force generated by the combined action of the electrode terminal 22 and the wall portion of the shell 21, thereby achieving clearance sealing between the electrode terminal 22 and the wall portion of the shell 21. The sealing member 27 may be of a ringlike structure. The sealing member 27 is annularly arranged at the electrode terminal 22. The sealing member 27 may be but is not limited to a sealing ring and a sealing gasket. The sealing member 27 may be partially clamped between the electrode terminal 22 and the wall portion of the shell 21, or the sealing member 27 may be entirely clamped between the electrode terminal 22 and the wall portion of the shell 21.

By using the above technical solution, a risk of leakage of an electrolyte solution inside the shell 21 from a space between the electrode terminal 22 and the wall portion is lowered, which is beneficial to improving the performance of the battery cell 20.

In some embodiments of the present application, referring to FIG. 3 and FIG. 4 together, the shell 21 includes a case 211 and an end cover 212; one end of the case 211 has an opening; the end cover 212 covers the opening; the case 211 includes a side wall and a bottom wall; the side wall is annularly arranged on the outer side of the electrode assembly 23; the bottom wall is arranged opposite to the opening; and the wall portion is the end cover 212 or the bottom wall or the side wall.

The side wall of the case 211 is enclosed to the internal environment of the shell 21. Two ends of the side wall have openings. The bottom wall of the case 211 covers one opening of the side walls, and the end cover 212 covers the other opening of the side walls. The electrode terminal 22 may be arranged on the end cover 212, or may be arranged on the side wall of the case 211, or may be arranged on the bottom wall of the case 211. This can be specifically determined according to an actual need.

In a second aspect, an embodiment of the present application further provides a battery 100. Referring to FIG. 2, the battery 100 includes the battery cell 20 of any one of the above embodiments.

Performance of the battery 100 provided in this embodiment of the present application is effectively improved because the battery 100 uses the battery cell 20 of any one of the above embodiments.

In a third aspect, an embodiment of the present application further provides an electrical apparatus. Referring to FIG. 1, the electrical apparatus includes the above battery 100.

Performance of the electrical apparatus provided in this embodiment of the present application is effectively improved because the electrical apparatus uses the above battery 100.

The foregoing descriptions are merely preferred embodiments of the present application, but are not intended to limit present application. Any modification, equivalent replacement, or improvement made within the spirit and principle of present application shall fall within the protection scope of the present application.

## Claims

1. A battery cell, comprising:
an electrode assembly;
a shell, wherein the electrode assembly is at least partially accommodated in the shell; and
an electrode terminal electrically connected to the electrode assembly, wherein the electrode terminal is arranged on a wall portion of the shell,
wherein the electrode terminal comprises a first metal layer and a second metal layer that are made of different materials; in the thickness direction of the wall portion, the first metal layer is located on one side of the second metal layer facing the electrode assembly; the first metal layer and the second metal layer are connected to form a connecting interface; and at least a part of the connecting interface is a curved surface.

2. The battery cell according to claim 1, wherein the electrode terminal has a first central axis parallel to the thickness direction; the connecting interface comprises a first connecting surface and a second connecting surface located at the periphery of the first connecting surface; the first central axis passes through the first connecting surface; and the first connecting surface is a curved surface.

3. The battery cell according to claim 2, wherein the first connecting surface has a second central axis parallel to the thickness direction; and the second central axis overlaps the first central axis.

4. The battery cell according to claim 2 or 3, wherein the first metal layer is a copper layer; the second metal layer is an aluminum layer; and in the thickness direction, the first connecting surface is recessed relative to the second connecting surface in a direction close to the electrode assembly.

5. The battery cell according to any one of claims 2 to 4, further comprising an adapter, wherein the adapter is configured to connect the electrode assembly with the first metal layer, to electrically connect the electrode assembly with the electrode terminal;
the first metal layer comprises a first connecting portion for connecting the adapter; and at least a part of the first connecting portion is arranged opposite to the first connecting surface.

6. The battery cell according to claim 5, wherein the first connecting portion and the adapter are welded and fixed, and a first welding mark is formed.

7. The battery cell according to claim 6, wherein the first welding mark does not exceed the first connecting surface in a direction from the electrode assembly to the electrode terminal.

8. The battery cell according to claim 7, wherein in the thickness direction, the thickness of the part of the first connecting portion located at the first welding mark is H1, and the thickness of the part of the first welding mark located at the first connecting portion is H2, 0.6≤H2/H1≤0.9.

9. The battery cell according to any one of claims 6 to 8, wherein a positioning structure is arranged between the first metal layer and the adapter; and the first welding mark is arranged at the periphery of the positioning structure.

10. The battery cell according to claim 9, wherein the positioning structure comprises a protrusion and a recess which are matched with each other; one of the first metal layer and the adapter is provided with the protrusion; and the other one of the first metal layer and the adapter is provided with the recess.

11. The battery cell according to claim 10, wherein the first metal layer is provided with the protrusion; the adapter is provided with the recess; and the recess is a through hole penetrating through the adapter.

12. The battery cell according to claim 11, wherein the adapter is provided with a groove; the recess penetrates through the bottom of the groove; and the first welding mark is arranged at the bottom of the groove and is spaced apart from the recess.

13. The battery cell according to claim 11, wherein the adapter is provided with a groove; the recess penetrates through the bottom of the groove; and the protrusion passes through the recess and is fixedly connected to one side, facing the electrode assembly, of the bottom of the groove.

14. The battery cell according to any one of claims 2 to 13, wherein the second metal layer comprises a second connecting portion configured to be connected to an external busbar; and at least a part of the second connecting portion is arranged opposite to the first connecting surface.

15. The battery cell according to claim 14, wherein the second connecting portion and the external busbar are welded and fixed, and a second welding mark is formed.

16. The battery cell according to claim 15, wherein the second welding mark does not exceed the first connecting surface in a direction from the electrode terminal to the electrode assembly.

17. The battery cell according to claim 16, wherein in the thickness direction, the thickness of the part of the second connecting portion located at the second welding mark is H3, and the thickness of the part of the second welding mark located at the second connecting portion is H4, 0.6≤H4/H3≤0.9.

18. The battery cell according to any one of claims 2 to 17, wherein the second connecting surface is a curved surface.

19. The battery cell according to claim 1, wherein the electrode terminal has a first central axis parallel to the thickness direction; the connecting interface has a second central axis parallel to the thickness direction; the second central axis overlaps the first central axis;
the projection of the connecting interface in the thickness direction has a first length in a first direction; the projection of the electrode terminal in the thickness direction has a second length in the first direction; the first length is equal to the second length; and the first direction passes through the first central axis of the electrode terminal and is perpendicular to the thickness direction.

20. The battery cell according to claim 19, wherein the projection of the peripheral edge of the connecting interface in the thickness direction overlaps the projection of the peripheral edge of the electrode terminal in the thickness direction.

21. The battery cell according to claim 19 or 20, wherein,
the projection of the wall portion in the thickness direction is a rectangle, and the first direction is the length direction or width direction of the wall portion; or,
the projection of the wall portion in the thickness direction is a circular ring, and the first direction is the radial direction of the wall portion.

22. The battery cell according to any one of claims 19 to 21, wherein a distance between the point of the connecting interface closest to the electrode assembly and the first central axis is less than or equal to 6 mm.

23. The battery cell according to claim 22, wherein the point of the connecting interface closest to the electrode assembly is located on the first central axis.

24. The battery cell according to any one of claims 19 to 23, wherein in the thickness direction, a distance between the point of the connecting interface farthest from the electrode assembly and the point of the connecting interface closest to the electrode assembly is H5, 1 mm ≤ H5 ≤ 10 mm.

25. The battery cell according to any one of claims 1 to 24, further comprising an insulating member and a fixing member, wherein the wall portion is provided with an electrode lead-out hole; the fixing member is connected to the wall portion and is arranged around the electrode lead-out hole; at least a part of the electrode terminal is accommodated in an accommodating space defined by the fixing member; the insulating member is arranged between the fixing member and the electrode terminal; and the fixing member presses the electrode terminal through the insulating member, so that the electrode terminal is fixed to the wall portion.

26. The battery cell according to claim 25, further comprising a sealing member, wherein the sealing member is at least partially located between the wall portion and the electrode terminal.

27. The battery cell according to any one of claims 1 to 26, wherein the shell comprises a case and an end cover; one end of the case has an opening; the end cover covers the opening; the case comprises a side wall and a bottom wall; the side wall is annularly arranged on the outer side of the electrode assembly; the bottom wall is arranged opposite to the opening; and the wall portion is the end cover or the bottom wall or the side wall.

28. A battery, comprising the battery cell according to any one of claims 1 to 27.

29. An electrical apparatus, wherein the electrical apparatus comprises the battery according to claim 28.
